# FASCICULE DE BREVET EUROPEEN

(11) **EP 2 658 151 B1**
(45) Date de publication et mention de la délivrance du brevet: **27.03.2019**
(21) Numéro de dépôt: 13164737.2
(22) Date de dépôt: 22.04.2013
(51) Int. Cl.: H04B 10/272, H04L 12/10, H04L 12/28

(54) **Dispositif de communication destiné a relier une installation d'utilisateur à une fibre optique**
Kommunikationsvorrichtung zur Verbindung einer Benutzereinrichtung mit einem optischen Faser
Communication device to connect a user facility to an optical fiber

(30) Priorité: 26.04.2012 FR 1253858
(43) Date de publication de la demande: 30.10.2013
(73) Titulaire: Orange, 75015 Paris (FR)
(72) Inventeur: Chaillot, Christophe, 75015 Paris (FR); Hagerman, Dominique, 75008 Paris (FR)
(74) Mandataire: Cabinet Beau de Loménie

(56) Documents cités:
- WO-A1-97/34390
- US-A1- 2010 150 556

## Description

L'invention se rapporte au domaine général des télécommunications. L'invention concerne en particulier un dispositif de communication permettant de raccorder un utilisateur à un réseau d'accès très haut débit par fibre optique.

Une fibre optique permet une communication à très haut débit.

La solution consistant à installer une fibre optique jusque chez un utilisateur (FTTH pour « *Fibre To The Home* ») nécessite généralement des travaux de génie civil pour installer la fibre et la prise optique chez l'utilisateur. Ainsi, plusieurs solutions, regroupées sous l'acronyme FTTx, visent à relier l'utilisateur à la fibre optique, dont l'extrémité est située par exemple sur le palier d'un immeuble d'appartement ou sur un poteau téléphonique, par l'intermédiaire des câbles électriques préexistants, notamment la paire torsadée du réseau téléphonique ou le câble coaxial portant un signal de télévision.

Le document US 2010/0150556 décrit un système et un procédé pour alimenter un élément de réseau d'un réseau large bande à fibre optique.

Le document WO 97/34390 décrit une méthode de modulation en duplexage pour des communications haut débit sur une paire torsadée.

Cependant, aucune des solutions développées à ce jour n'est pleinement satisfaisante en termes de facilité d'installation, besoin d'alimentation, bande passante,... Il existe donc un besoin pour améliorer le raccordement d'un utilisateur au réseau de fibre optique.

### Objet et résumé de l'invention

L'invention se rapporte à un dispositif de communication destiné à relier une installation d'utilisateur à une fibre optique, ledit dispositif comprenant :
- un premier connecteur destiné à être connecté à un premier câble coaxial sur lequel est transmis un premier signal électrique occupant une première bande de communication, un deuxième connecteur destiné à être connecté à la fibre optique sur lequel est transmis un deuxième signal optique, et un troisième connecteur destiné à être connecté à un deuxième câble coaxial relié à l'installation d'utilisateur,
- un module de conversion relié audit deuxième connecteur, agencé pour réaliser une conversion bidirectionnelle entre le deuxième signal optique en un troisième signal électrique occupant une deuxième bande de communication séparée de la première bande de communication,
- un premier module de transfert agencé pour transférer le premier signal entre le premier connecteur et le troisième connecteur dans la première bande de communication, et à réaliser un transfert bidirectionnel du troisième signal entre le module de conversion et le troisième connecteur dans la deuxième bande de communication, et
- un module d'alimentation agencé pour fournir une alimentation électrique à partir d'une tension d'alimentation reçue sur le troisième connecteur dans une troisième bande de communication, séparée des première et deuxième bandes de communication.

Corrélativement, l'invention propose l'utilisation d'un dispositif de communication conforme à l'invention pour relier une installation d'utilisateur à une fibre optique par l'intermédiaire d'un câble électrique. Le câble électrique peut être un câble coaxial ou un câble téléphonique. Le dispositif de communication est placé en coupure du câble coaxial et/ou connecté au câble téléphonique.

Ce dispositif de communication permet donc de relier un utilisateur à la fibre optique, sans nécessiter de tirer la fibre optique jusque chez l'utilisateur. Au contraire, en utilisant un câble électrique, par exemple un câble coaxial, qui peut être déjà présent, on évite les travaux d'installation compliqués. De plus, le dispositif de communication peut être rétro-alimenté à partir de l'installation de l'utilisateur. Il n'est donc pas nécessaire de prévoir une alimentation spécifique. Enfin, comme le module de conversion et le premier module de transfert sont intégrés dans un même dispositif, l'installation de ces deux fonctions est facilitée par rapport à une situation ou deux dispositifs distincts réaliseraient chacun une de ces fonctions.

Selon un mode de réalisation, le dispositif de communication comprend en outre un quatrième connecteur destiné à être connecté à un troisième câble électrique de type différent du deuxième câble électrique, tel qu'un câble téléphonique, et un deuxième module de transfert agencé pour réaliser un transfert bidirectionnel du troisième signal entre le module de conversion et le quatrième connecteur. Le premier module de transfert est alors configuré pour transférer uniquement le premier signal lorsque le dispositif de communication est connecté au câble téléphonique.

Dans ce cas, le dispositif de communication présente l'avantage de pouvoir être installé dans différentes situations, en fonction de la disponibilité d'un câble d'un premier type et/ou d'un deuxième type. Par exemple, le dispositif de communication permet de relier l'utilisateur à la fibre optique par l'intermédiaire d'un câble coaxial déjà présent pour transmettre un signal de télévision, en plaçant le dispositif en coupure sur le câble coaxial, ou par l'intermédiaire d'un câble téléphonique de type paire torsadée déjà présent pour la téléphonie en connectant le dispositif de communication au câble téléphonique. Il n'est donc pas nécessaire de prévoir différentes versions du dispositif pour différentes situations.

Dans ce mode de réalisation, le module d'alimentation peut également être agencé pour fournir l'alimentation électrique à partir d'une tension d'alimentation reçue sur le quatrième connecteur.

Cela permet d'alimenter le dispositif de communication à partir d'une tension d'alimentation injectée sur le câble téléphonique, notamment quand aucune tension d'alimentation n'est injectée sur le deuxième câble coaxial.

Dans un mode de réalisation particulier, le troisième signal est un signal transmis en bande de base.

Dans un mode de réalisation particulier, le module de transfert et le module d'alimentation correspondent à un circuit électronique composé de filtres passe-haut et de filtres passe-bas, permettant de séparer les première, deuxième et troisième bandes de communication.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un dispositif de communication selon un premier mode de réalisation de l'invention, dans son environnement,
- la figure 2 représente un dispositif de communication selon un deuxième mode de réalisation de l'invention,
- la figure 3 représente le dispositif de communication de la figure 2 dans son environnement, selon une première variante d'utilisation, et
- la figure 4 représente le dispositif de communication de la figure 2 dans son environnement, selon une deuxième variante d'utilisation.

### Description détaillée de modes de réalisation

Dans la description qui suit, le mot « câble » est utilisé pour désigner un câble incluant au moins un support en matériau conducteur permettant de transmettre un signal électrique, par opposition à une fibre optique qui permet de transmettre un signal optique.

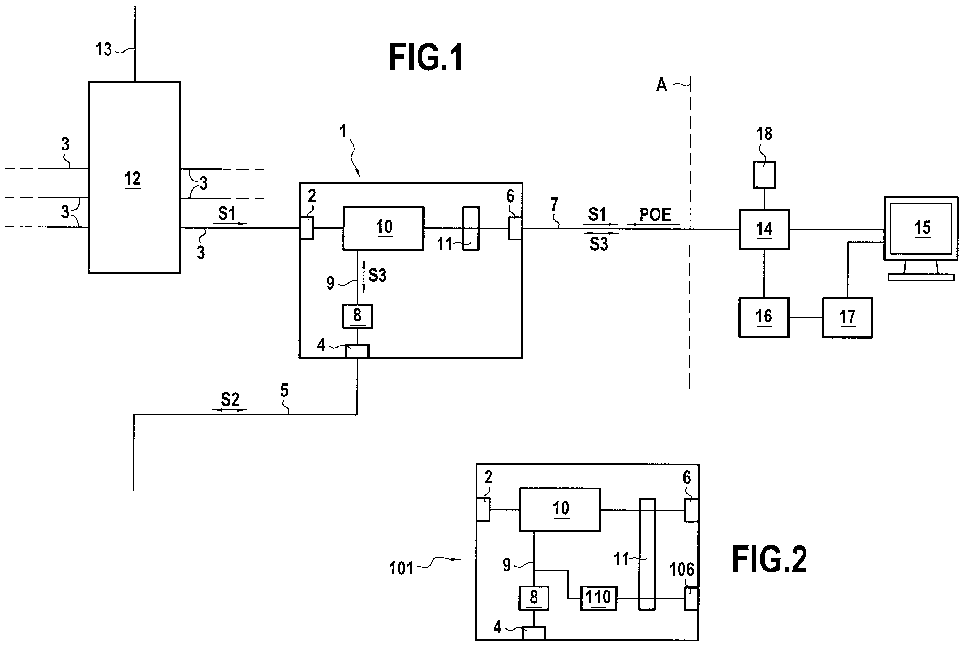

La **figure 1** représente un dispositif de communication 1 selon un premier mode de réalisation de l'invention, dans son environnement. Sur la figure 1, l'axe A sépare, à droite, un espace privé (par exemple le domicile d'un utilisateur) et, à gauche, un espace collectif (par exemple le palier d'un immeuble d'appartements).

L'installation de l'utilisateur comprend une prise 14 reliée à un câble coaxial 7 venant de l'espace collectif. La prise 14 est une prise mixte Coaxiale/RJ45 à laquelle est reliée une télévision 15 par un câble coaxial et une passerelle 16 par l'intermédiaire d'un câble RJ45. La passerelle 16 est également reliée à un décodeur multimédia 17, ce dernier étant relié à la télévision 15, par exemple par un câble HDMI.

Dans une variante, la passerelle 16 injecte une tension d'alimentation sur le câble coaxial 7, par la prise 14. Dans une autre variante, l'installation de l'utilisateur comprend un dispositif d'alimentation 18 qui injecte une tension d'alimentation sur le câble coaxial 7, par la prise 14. Dans les deux cas, l'injection de la tension d'alimentation est par exemple réalisée conformément à la norme POE (pour « *Power Over Ethernet* »).

Du côté de l'espace collectif, l'installation comprend le dispositif de communication 1 et un boîtier d'éclatement 12.

Le boîtier d'éclatement 12 est relié d'une part à un câble coaxial 13 provenant par exemple d'une antenne, et à une pluralité de câbles coaxiaux 3, chaque câble coaxial 3 s'étendant vers l'installation d'un utilisateur respectif.

Le dispositif de communication 1 est placé en coupure entre un câble coaxial 3 et le câble coaxial 7 vers l'utilisateur. Il comprend donc un connecteur 2 pour le câble coaxial 3 et un connecteur 6 pour le câble coaxial 7. Le dispositif de communication 1 comprend également un connecteur 4 auquel est reliée une fibre optique 5.

Le dispositif de communication 1 comprend également un module de conversion 8, un bus interne 9, un module de transfert 10 et un module d'alimentation 11. Le dispositif de communication 1 se présente sous la forme d'un boîtier présentant les connecteurs 2, 4 et 6 sur sa surface extérieure, et dans lequel se trouvent le module de conversion 8, le bus interne 9, le module de transfert 10 et le module d'alimentation 11.

Le module de conversion 8 présente par exemple la structure d'une unité ONT ou ONU (pour « *Optical Network Termination* » ou « *Optical Network Unit* ») et permet de convertir d'une part le signal optique reçu de la fibre optique 5 en un signal électrique sur le bus interne 9, et d'autre part un signal électrique sur le bus interne 9 en un signal optique émis sur la fibre optique 5.

Le module de transfert 10 est configuré pour transférer d'une part les signaux dans une première bande passante entre le câble coaxial 3 et le câble coaxial 7, et d'autre part les signaux dans une deuxième bande passante, séparée de la première bande passante, entre le bus interne 9 et le câble coaxial 7.

Le module d'alimentation 11 est configuré pour générer une tension d'alimentation à partir de la tension injectée sur le câble coaxial 7 par la passerelle 16 ou le dispositif d'alimentation 18. Cette tension est utilisée notamment pour alimenter le module de conversion 8.

La représentation de la figure 1 est une représentation fonctionnelle. En pratique, le module de transfert 10 et le module d'alimentation 11 peuvent correspondre à un même circuit électronique composé de filtres passe-haut et de filtres passe-bas afin de séparer la première bande passante, la deuxième bande passante et la tension d'alimentation.

Le fonctionnement du dispositif de communication 1 est le suivant.

Comme expliqué précédemment, le dispositif de communication 1 reçoit une tension d'alimentation, notée POE, par le câble coaxial 7. La tension d'alimentation POE occupe par exemple la bande passante 300KHz-5MHz.

Le dispositif d'alimentation reçoit un signal S1 par le câble coaxial 3. Le signal S1 est par exemple un signal TV et Radio (par exemple un signal DVB-T, un signal TNT, radio numérique et/ou TNT2) provenant d'une antenne reliée au câble coaxial 13 et fournit au câble coaxial 3 par le boitier d'éclatement 12. Il occupe par exemple la bande passante 125MHz-862MHz.

Le signal S1 est transféré par le module de transfert 10 sur le câble coaxial 7 vers la prise 14 et le téléviseur 15. L'utilisateur reçoit donc, sur la télévision 15, le signal S1 de manière transparente, comme si le dispositif de communication 1 n'était pas présent.

Par ailleurs, un signal S2 est présent sur la fibre optique. Le signal S2 optique est bidirectionnel et comprend donc un flux montant (utilisant par exemple une longueur d'onde de 1310 nm) et un flux descendant (utilisant par exemple une longueur d'onde de 1490 nm). Les données du signal S2 comprennent par exemple des données de télévision sur IP (IPTV), de voix sur IP, de communication réseau IP,...

Le module de conversion 8 réalise une conversion bidirectionnelle entre le signal S2 optique et un signal S3 électrique sur le bus interne 9. Le signal S3 est un signal transmis en bande de base par exemple un signal Fast Ethernet qui occupe la bande passante 5MHz-125MHz. Le signal S3 est transféré de manière bidirectionnelle entre le bus interne 9 et le câble coaxial 7, par le module de transfert 10. Du côté de l'installation de l'utilisateur, le signal S3 est transmis à la passerelle 16.

Ainsi, le câble coaxial 7 porte le signal S1 dans une première bande passante, le signal S3 dans une deuxième bande passante, et la tension d'alimentation POE dans une troisième bande passante, les trois bandes passantes étant séparées les unes des autres.

Le dispositif de communication 1 permet donc de relier l'utilisateur à la fibre optique 5, sans nécessiter de tirer la fibre optique jusque chez l'utilisateur. Au contraire, en utilisant le câble coaxial 7 déjà présent, on évite les travaux d'installation compliqués. De plus, le dispositif de communication 1 peut être rétro-alimenté à partir de l'installation de l'utilisateur. Il n'est donc pas nécessaire de prévoir une alimentation spécifique du côté collectif. Enfin, comme le module de conversion 8 et le module de transfert 10 sont intégrés dans un même boîtier, l'installation de ces deux fonctions est facilitée par rapport à une situation où deux dispositifs distincts, correspondant à deux boîtiers distincts, réaliseraient chacun une de ces fonctions.

La **figure 2** représente un dispositif de communication 101 selon un deuxième mode de réalisation de l'invention. Sur la figure 2, les éléments identiques ou similaires à des éléments du dispositif de communication 1 de la figure 1 sont désignés par les mêmes références et ne sont plus décrits en détails. On décrit maintenant les spécificités du dispositif de communication 101.

En plus des connecteurs 2, 4 et 6, du module de conversion 8, du bus interne 9, du module de transfert 10 et du module d'alimentation 11, le dispositif de communication 101 comprend un connecteur 106 et un module de transfert 110.

Le connecteur 106 permet de relier le dispositif de communication 101 à l'installation d'un utilisateur par l'intermédiaire d'un câble téléphonique de type paire torsadée.

Le module de transfert 110 est configuré pour réaliser un transfert bidirectionnel entre le bus interne 9 et le connecteur 106 lorsqu'un câble téléphonique est relié au connecteur 106. Dans ce cas, le module de transfert 10 est configuré pour transférer les signaux dans une première bande passante entre le câble coaxial 3 et le câble coaxial 7.

Si le câble téléphonique relié au connecteur 106 est court et de bonne qualité, le signal S3 du bus interne 9 peut être transféré tel quel, par exemple en Fast Ethernet. Si non, il peut être transféré après mise en forme, en VDSL2 par exemple.

Dans le dispositif de communication 101, le module d'alimentation 11 est configuré pour générer une tension à partir de la tension d'alimentation reçue soit sur le connecteur 6 (comme dans le cas du dispositif d'alimentation 1) soit du connecteur 106.

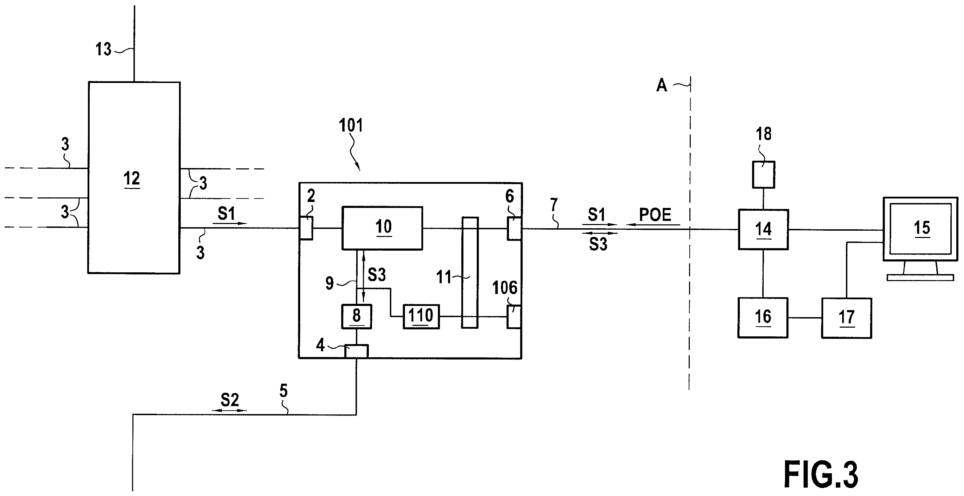

La **figure 3** représente le dispositif de communication 101 dans son environnement, selon un premier mode d'utilisation.

Dans le mode d'utilisation de la figure 3, aucun câble téléphonique n'est relié au connecteur 106. Le fonctionnement du dispositif de communication 101 est sensiblement identique au fonctionnement du dispositif de communication 1 décrit précédemment.

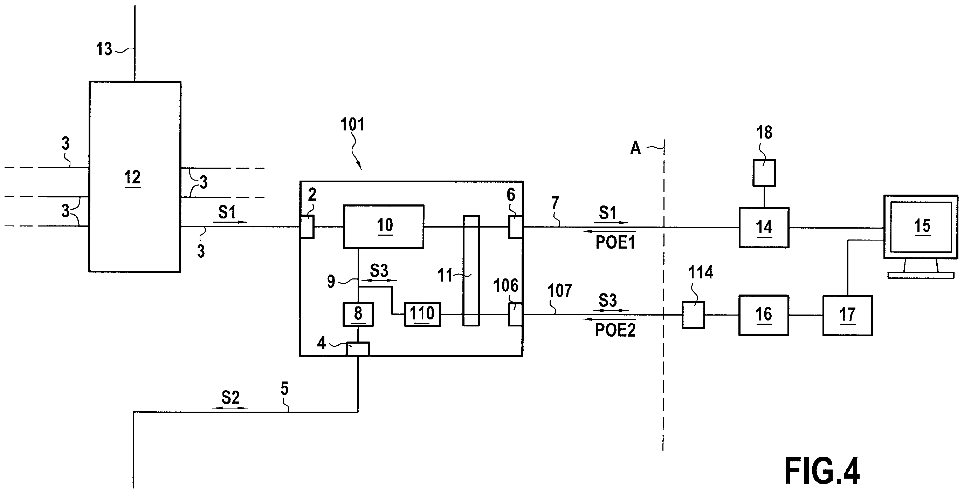

La **figure 4** représente le dispositif de communication 101 dans son environnement, selon un deuxième mode d'utilisation.

Dans le mode d'utilisation de la figure 4, un câble téléphonique 107 de type paire torsadée relie le connecteur 106 du dispositif de communication 101 à une prise téléphonique 114 chez l'utilisateur. La passerelle 16 est reliée à la prise téléphonique 114.

Dans une variante, la passerelle 16 injecte une tension d'alimentation POE2 sur le câble 107. Dans une autre variante, un dispositif d'alimentation 18 injecte une tension d'alimentation POE1 sur le câble 7. Les deux tensions d'alimentations POE1 et POE2 sont représentées sur la figure 4, mais il faut comprendre que le dispositif de communication 101 peut fonctionner avec seulement une des tensions d'alimentations POE1 et POE2.

Dans le mode d'utilisation de la figure 4, le signal S1 est transmis du câble coaxial 3 vers la télévision 15 par le module de transfert 10, le câble coaxial 7 et la prise 14 Le module de transfert 10 est ainsi configuré pour transférer uniquement le signal S1, s'il est présent, lorsque le dispositif de communication 101 est connecté au câble téléphonique 107.

On souligne ici que ce mode d'utilisation correspond à un exemple particulier où le câble coaxial 3 est présent et où le signal S1 est reçu par le dispositif de communication 101. Le dispositif de communication 101 peut également être utilisé sans câble coaxial 3 connecté au connecteur 2.

Par ailleurs, le module de conversion 8 réalise une conversion bidirectionnelle entre le signal S2 optique et le signal S3 électrique sur le bus interne 9.

De plus, le module de transfert 110 réalise un transfert bidirectionnel du signal S3 entre le bus interne 9 et le câble téléphonique 107. Le signal S3 est transféré de manière bidirectionnelle de la fibre optique 5 vers la passerelle 16 par le module de transfert 110, le câble téléphonique 107 et la prise 114. Ainsi, la passerelle 16 peut communiquer en profitant du haut débit offert par la fibre optique 5.

Le dispositif de communication 101 présente l'avantage de pouvoir être installé dans différentes situations, en fonction de la disponibilité d'un câble coaxial et/ou d'une paire torsadée. Il n'est pas nécessaire de prévoir différentes versions du dispositif pour différentes situations.

## Revendications

1. Dispositif de communication (101) destiné à relier une installation d'utilisateur à une fibre optique, ledit dispositif comprenant :
- un premier connecteur (2) destiné à être connecté à un premier câble (3) sur lequel est transmis un premier signal (S1) électrique occupant une première bande de communication, un deuxième connecteur (4) destiné à être connecté à la fibre optique (5) sur lequel est transmis un deuxième signal (S2) optique, et un troisième connecteur (6) destiné à être connecté à un deuxième câble (7), ledit deuxième câble étant relié à l'installation d'utilisateur,
- un module de conversion (8) relié audit deuxième connecteur (4), agencé pour réaliser une conversion bidirectionnelle entre le deuxième signal (S2) optique et un troisième signal (S3) électrique occupant une deuxième bande de communication séparée de la première bande de communication,
- un premier module de transfert (10) agencé pour transférer le premier signal (S1) entre le premier connecteur (2) et le troisième connecteur (6) dans la première bande de communication, et à réaliser un transfert bidirectionnel du troisième signal (S3) entre le module de conversion (8) et le troisième connecteur (6) dans la deuxième bande de communication, et
- un module d'alimentation (11) agencé pour fournir une alimentation électrique à partir d'une tension d'alimentation (POE, POE1) reçue sur le troisième connecteur (6),
ledit dispositif de communication étant **caractérisé en ce que** :
- le premier câble et le deuxième câble sont des câbles coaxiaux ; et
- la tension d'alimentation est reçue sur le troisième connecteur dans une troisième bande de communication séparée des première et deuxième bandes de communication ;
et **en ce que** ledit dispositif de communication (101) comprend en outre un quatrième connecteur (106) destiné à être connecté à un câble téléphonique (107), et un deuxième module de transfert (110) agencé pour réaliser un transfert bidirectionnel du troisième signal (S3) entre le module de conversion (8) et le quatrième connecteur (106), le premier module de transfert étant alors configuré pour transférer uniquement le premier signal lorsque le dispositif de communication est connecté au câble téléphonique.

2. Dispositif de communication (101) selon la revendication 1, dans lequel le module d'alimentation (11) est également agencé pour fournir une alimentation électrique à partir d'une tension d'alimentation (POE2) reçue sur le quatrième connecteur (106).

3. Dispositif de communication (101) selon la revendication 1, dans lequel le troisième signal est un signal transmis en bande de base.

4. Dispositif de communication (101) selon la revendication 1, dans lequel le premier module de transfert et le module d'alimentation correspondent à un circuit électronique composé de filtres passe-haut et de filtres passe-bas, permettant de séparer les première, deuxième et troisième bandes de communication.

## Patentansprüche

1. Kommunikationsvorrichtung (101), die dazu bestimmt ist, eine Benutzereinrichtung mit einer optischen Faser zu verbinden, wobei die Vorrichtung umfasst:
- einen ersten Steckverbinder (2), der dazu bestimmt ist, an ein erstes Kabel (3) angeschlossen zu sein, auf dem ein erstes elektrisches Signal (S1) übertragen wird, das ein erstes Kommunikationsband einnimmt, einen zweiten Steckverbinder (4), der dazu bestimmt ist, an die optische Faser (5) angeschlossen zu sein, auf der ein zweites optisches Signal (S2) übertragen wird, und einen dritten Steckverbinder (6), der dazu bestimmt ist, an ein zweites Kabel (7) angeschlossen zu sein, wobei das zweite Kabel mit der Benutzereinrichtung verbunden ist,
- ein Umwandlungsmodul (8), das mit dem zweiten Steckverbinder (4) verbunden und dazu vorgesehen ist, eine bidirektionale Umwandlung zwischen dem zweiten optischen Signal (S2) und einem dritten elektrischen Signal (S3), das ein zweites Kommunikationsband einnimmt, das vom ersten Kommunikationsband getrennt ist, durchzuführen,
- ein erstes Übertragungsmodul (10), das dazu vorgesehen ist, das erste Signal (S1) zwischen dem ersten Steckverbinder (2) und dem dritten Steckverbinder (6) in dem ersten Kommunikationsband zu übertragen, und eine bidirektionale Übertragung des dritten Signals (S3) zwischen dem Umwandlungsmodul (8) und dem dritten Steckverbinder (6) in dem zweiten Kommunikationsband durchzuführen, und
- ein Versorgungsmodul (11), das dazu vorgesehen ist, eine elektrische Versorgung auf Basis einer am dritten Steckverbinder (6) empfangenen Versorgungsspannung (POE, POE1) zu liefern,
wobei die Kommunikationsvorrichtung **dadurch gekennzeichnet ist, dass**:
- das erste Kabel und das zweite Kabel Koaxialkabel sind; und
- die Versorgungsspannung am dritten Steckverbinder in einem dritten Kommunikationsband empfangen wird, das von den ersten und zweiten Kommunikationsbändern getrennt ist;
und dass die Kommunikationsvorrichtung (101) ferner einen vierten Steckverbinder (106) umfasst, der dazu bestimmt ist, an ein Telefonkabel (107) angeschlossen zu werden, und ein zweites Übertragungsmodul (110), das dazu vorgesehen ist, eine bidirektionale Übertragung des dritten Signals (S3) zwischen dem Umwandlungsmodul (8) und dem vierten Steckverbinder (106) durchzuführen, wobei das erste Übertragungsmodul nun eingerichtet ist, um nur das erste Signal zu übertragen, wenn die Kommunikationsvorrichtung an das Telefonkabel angeschlossen ist.

2. Kommunikationsvorrichtung (101) nach Anspruch 1, bei der das Versorgungsmodul (11) auch dazu vorgesehen ist, eine elektrische Versorgung auf Basis einer am vierten Steckverbinder (106) empfangenen Versorgungsspannung (POE2) zu liefern.

3. Kommunikationsvorrichtung (101) nach Anspruch 1, bei der das dritte Signal ein im Basisband übertragenes Signal ist.

4. Kommunikationsvorrichtung (101) nach Anspruch 1, bei der das erste Übertragungsmodul und das Versorgungsmodul einer elektronischen Schaltung entsprechen, die von Hochpass- und Tiefpassfiltern gebildet ist, die es ermöglichen, das erste, zweite und dritte Kommunikationsband zu trennen.

## Claims

1. Communication device (101) intended to link a user installation to an optical fibre, said device comprising:
- a first connector (2) intended to be connected to a first cable (3) on which a first electrical signal (S1) occupying a first communication band is transmitted, a second connector (4) intended to be connected to the optical fibre (5) on which a second optical signal (S2) is transmitted, and a third connector (6) intended to be connected to a second cable (7), said second cable being linked to the user installation,
- a conversion module (8) linked to said second connector (4), designed to perform a bidirectional conversion between the second optical signal (S2) and a third electrical signal (S3) occupying a second communication band separate from the first communication band,
- a first transfer module (10) designed to transfer the first signal (S1) between the first connector (2) and the third connector (6) in the first communication band, and to perform a bidirectional transfer of the third signal (S3) between the conversion module (8) and the third connector (6) in the second communication band, and
- a power supply module (11) designed to supply electric power from a supply voltage (POE, POE1) received on the third connector (6),
said communication device being **characterized in that**:
- the first cable and the second cable are coaxial cables; and
- the supply voltage is received on the third connector in a third communication band separate from the first and second communication bands;
and **in that** said communication device (101) furthermore comprises a fourth connector (106) intended to be connected to a telephone cable (107), and a second transfer module (110) designed to perform a bidirectional transfer of the third signal (S3) between the conversion module (8) and the fourth connector (106), the first transfer module then being configured so as to transfer only the first signal when the communication device is connected to the telephone cable.

2. Communication device (101) according to Claim 1, wherein the power supply module (11) is also designed to supply electric power from a supply voltage (POE2) received on the fourth connector (106).

3. Communication device (101) according to Claim 1, wherein the third signal is a signal transmitted in baseband.

4. Communication device (101) according to Claim 1, wherein the first transfer module and the power supply module correspond to an electronic circuit formed of high-pass filters and low-pass filters, making it possible to separate the first, second and third communication bands.
